(19) Europäisches Patentamt
European Patent Office
Office européen des brevets

(11) Publication number : 0 492 974 A2

(12) # EUROPEAN PATENT APPLICATION

(21) Application number : 91311783.4

(51) Int. Cl.[5] : **C08L 59/00**, C08K 5/06

(22) Date of filing : 19.12.91

(30) Priority : 20.12.90 JP 404426/90
24.01.91 JP 7181/91

(43) Date of publication of application :
01.07.92 Bulletin 92/27

(84) Designated Contracting States :
AT BE CH DE DK ES FR GB GR IT LI LU MC NL SE

(71) Applicant : POLYPLASTICS CO. LTD.
3-13, Azuchicho, 2-chome
Chuo-Ku Osaka-shi Osaka 541 (JP)

(72) Inventor : Murao, Toshiro
324, Miyashita
Fuji-shi, Shizuoka (JP)
Inventor : Yamamoto, Kaoru
52, Morishita
Fuji-shi, Shizuoka (JP)
Inventor : Kanaka, Keiichi
26-2, Gokanjima
Fuji-shi, Shizuoka (JP)
Inventor : Kusagaya, Mitsuharu
137-32, Kanbara-cho
Ihara-gun, Shizuoka (JP)

(74) Representative : Jackson, Peter et al
HYDE, HEIDE & O'DONNELL 10-12 Priests Bridge
London SW15 5JE (GB)

(54) **Stabilized polyoxymethylene resin composition.**

(57) A polyoxymethylene resin composition having improved thermal stability is provided by incorporating in the composition, in an amount of 0.01 to 5% by weight thereof, a stabilizer of the following general formula (I) or (II) :

$$Ar^1\text{-O-X} \quad (I)$$
$$Ar^2(\text{-O-X})_s \quad (II)$$

wherein $Ar^1$ represents an aryl group (excluding one having a hydroxyl group directly bonded thereto as a substituent), $Ar^2$ represents a benzene or naphthalene ring (excluding one having a hydroxyl group directly bonded thereto as a substituent), X is selected from among alkyl groups, hydroxyalkyl groups and condensates thereof, such as $-C_mH_{2m+1}$ or $-(C_mH_{2m}O)_nC_pH_{2p+1}$ , ester groups such as $-C_mH_{2m}COOC_nH_{2n+1}$ or $-C_mH_{2m}OCOC_nH_{2n+1}$ , those having an amino group such as $-C_mH_{2m}N(C_pH_{2p+1})(C_qH_{2q+1})$, and certain related groups,
(m and n each being an integer of 1 to 20, p and q each being an integer of 0 to 20, and R being an alkyl or alkoxy group having 1 to 20 carbon atoms, phenyl or phenoxy group) and s represents an integer of 2 or 3.

EP 0 492 974 A2

The present invention relates to a polyoxymethylene resin and a composition thereof having excellent thermal stability.

Polyoxymethylene resins having well-balanced properties and being easily processable are widely used as typical engineering plastics for components of electric and electronic equipment, of automobiles and of other machinery. However, as their uses have become more widespread and varied, there has appeared a demand for a even higher qualities. The characteristic properties required of them are minimization of the following problems: lowering of mechanical strength in their extrusion or molding; the formation of mold deposits; deterioration of mechanical properties caused by treat aging; and discolouration of the moldings. One of the important factors of these phenomena is the decomposition of the polymer in the course of heating.

Due to their chemical structure, polyoxymethylenes are easily decomposable when heated in an oxidizing atmosphere or under acidic or alkaline conditions The chemically active terminal of a polymer can be stabilized, for example by esterifying it by acetylation (homopolymer) or by copolymerizing trioxane with a monomer, such as a cyclic ether or cyclic formal, having an adjacent carbon bond, and then removing the unstable terminal by decomposition to form an inert, stable terminal (copolymer). However, cleavage of the main chain of the polymer also occurs during heating. To inhibit this reaction, the above-described process is insufficient and in practice the addition of an antioxidant and another stabilizer has hitherto been indispensable.

Moreover, even a polyoxymethylene composition containing such stabilizers is not completely free from such decomposition, being affected by heat and oxygen in the cylinder of a molding machine during the molding in such ways as to undergo decomposition of the main chain or to form formaldehyde from terminal groups which have not been fully stabilized. As a result, the working atmosphere is polluted in the extrusion molding step and, when the molding is conducted for a long period of time, a fine powder or tarry substance is deposited on the mold (mold deposit). The latter is one of the worst conditions for reducing working efficiency and for impairing the surface condition of the molding. Further the decomposition of the polymer causes lowering in the mechanical strength and coloring of the resin. In addition, the decomposition of the main chain caused when the molding is heated for a long period of time. (heat aging) is one of the causes of the lowering in the mechanical strength and coloring thereof. Under these circumstances, efforts are being made for the purpose of finding a more effective stabilizer formulation.

The antioxidants to be added to the polyoxymethylene resin include phenolic compounds having a steric hindrance group (hindered phenols) and amine compounds having such a group (hindered amines). Other stabilizers include a combination of polyamides, urea derivatives, amidine compounds, alkali or alkaline earth metal hydroxides, and organic or inorganic acid salts.

Although the hindered phenols are particularly effective antioxidants, the phenols are weak acids, which are converted into strong acids upon absorption of light and therefore tend to act as a polymer decompositing catalyst when they are used in large amounts. Further the oxidation product of the hindered phenol tends to cause coloring (discoloration) of the composition. In addition, it per se causes mold deposits in the molding step. Thus the formulation of a stabilizer having wellbalanced molding stability, heat aging stability and weather resistance is delicate, since although it is capable of exhibiting its function in the course of the molding or heat aging or under irradiation with a light, it also causes the decomposition of the polymer.

The object of the present invention is to improve the stability of the polyoxymethylene.

After intensive investigations made for the purpose of providing a more effective stabilizer for the polyoxymethylene by solving the above-described problems, the inventors have found that a specified series of compounds having a phenoxy unit in the structure thereof are effective in stabilizing the polyoxymethylene. The present invention has been completed on the basis of this finding.

Thus the present invention relates to a polyoxymethylene resin composition characterized by containing 0.01 to 5% by weight, based on the polyoxymethylene resin, of a phenoxy compound of the following general formula (I) or (II) and aims at solving problems posed by the insufficient stability such as the deterioration of the resin by oxidation or thermal deposition in the course of the extrusion or molding, the formation of the mold deposit and the deterioration thereof by the heat aging:

$$Ar^1\text{-}O\text{-}X \qquad (I)$$

$$Ar^2(\text{-}O\text{-}X)_s \qquad (II).$$

In the general formula (I) , $Ar^1$ represents an aryl group (excluding one having a hydroxyl group directly bonded thereto as a substituent) such as a phenyl, biphenyl or naphthol group. In the general formula (II), $Ar^2$ represents a benzene or naphthalene ring (excluding one having a hydroxyl group directly bonded thereto as a substituent), particularly a benzene ring.

In the general formulae (I) and (II), -OX represents a substituent other than a hydroxyl group, namely, one or more alkoxy derivatives wherein X represents a group selected from among

$-C_mH_{2m+1}$

$-(C_mH_{2m}O)_nC_pH_{2p+1}$

$-C_mH_{2m}SC_pH_{2p+1}$
$-C_mH_{2m}COC_nH_{2n+1}$
$-C_mH_{2m}COOC_nH_{2n+1}$
$-C_mH_{2m}OCOC_nH_{2n+1}$
$-C_mH_{2m}S(=O)_2C_nH_{2n+1}$
$-C_mH_{2m}P(=O)(R)C_nH_{2n+1}$
$-C_mH_{2m}P(=O)(R)OC_nH_{2n+1}$
$-C_mH_{2m}OP(=O)(R)C_nH_{2n+1}$
$-C_mH_{2m}OP(=O)(R)OC_nH_{2n+1}$
$-C_mH_{2m}N(C_pH_{2p+1})(C_qH_{2q+1})$
$-C_mH_{2m}CON(C_pH_{2p+1})(C_qH_{2q+1})$ and
$-C_mH_{2m}N(C_pH_{2p+1})COC_qH_{2q+1}$
m and n each being an integer of 1 to 20, p and q each being an integer of 0 to 20, and R being an alkyl or alkoxy group having 1 to 20 carbon atoms, phenyl or phenoxy group).

As for the groups X, particularly preferred are alkyl groups, hydroxyalkyl groups and condensates thereof such as $-C_mH_{2m+1}$ or $-(C_mH_{2m}O)_nC_pH_{2p+1}$ , ester groups such as $-C_mH_{2m}COOC_nH_{2n+1}$ or $-C_mH_{2m}OCOC_nH_{2n+1}$, or those having an amino group such as $-C_mH_{2m}N(C_pH_{2p+1})(C_qH_{2q+1})$.

Examples of the alkyl groups include straight-chain alkyl groups and isopropyl, isobutyl, sec.-butyl and tert.-butyl groups. Examples of the hydroxyalkyl groups include hydroxyethyl, hydroxypropyl, hydroxybutyl, 3-hydroxy-2-methylpropyl, 2-hydroxy-2-methylpropyl, hydroxypentyl and 3-hydroxy2,2-dimethylpropyl groups.

Examples of the hydroxyalkyl group condensates include those of ethylene glycol, propanediol and 1,4-butanediol.

$Ar^1$ of the general formula (I) and $Ar^2$ of the general formula (II) may be one having no substituent other than -OX or having a substituent selected from among the following ones in addition to -OX:

$-C_mH_{2m+1}$ $-(C_mH_{2m}O)_nC_pH_{2p+1}$
$-C_mH_{2m}SC_pH_{2p+1}$
$-C_mH_{2m}COC_nH_{2n+1}$
$-C_mH_{2m}COOC_nH_{2n+1}$
$-C_mH_{2m}OCOC_nH_{2n+1}$
$-C_mH_{2m}S(=O)_2C_nH_{2n+1}$
$-C_mH_{2m}P(=O)(R)C_nH_{2n+1}$
$-C_mH_{2m}P(=O)(R)OC_nH_{2n+1}$
$-C_mH_{2m}OP(=O)(R)C_nH_{2n+1}$
$-C_mH_{2m}OP(=O)(R)OC_nH_{2n+1}$
$-C_mH_{2m}N(C_pH_{2p+1})(C_qH_{2q+1})$
$-C_mH_{2m}CON(C_pH_{2p+1})(C_qH_{2q+1})$ and
$-C_mH_{2m}N(C_pH_{2p+1})COC_nH_{2n+1}$
(m and n each being an integer of 1 to 20, p and q each being an integer of 0 to 20, and R being an alkyl or alkoxy group having 1 to 20 carbon atoms, phenyl or phenoxy group) and phenyl group. Among them, those having no substituent other than -OX or those having $-C_mH_{2m+1}$, $-(C_mH_{2m}O)_nC_pH_{2p+1}$ , $-C_mH_{2m}COOC_nH_{2n+1}$ , or $-C_mH_{2m}CON(C_pH_{2p+1})(C_qH_{2q+1})$ as the substituent are preferably used. Such a substituent is effective in improving the reactivity of the compound, improving the compatibility with the polyoxymethylene resin, elevating the boiling point or subliming temperature and preventing the stabilizer from volatilizating at a high temperature. The number of the substituents is not limited to one but two or more substituents may be introduced into any of the o-, m- and p-positions.

In the general formula (II), s represents the number of the substituents of the alkoxy derivative. For example, when Ar is a benzene ring, s can be 2 to 6 and when Ar is a naphthalene ring, s can be 2 to 8. n is preferably 2 or 3. The two or more alkoxy derivatives may be the same or different from each other. The relative positions of the substituents may be any of o-, m- and p-positions.

The compound selected from among those of the formulae (I) and (II) is added in an amount of 0.01 to 5% by weight, preferably 0.1 to 2% by weight, based on the polyoxymethylene resin. When the amount of the compound is insufficient, the stabilization effect is poor and, on the contrary, when it is excessive, the decomposition and discoloration of the polymer are often unfavorably accelerated.

The polyoxymethylene into which these additives are to be incorporated is a polymeric compound comprising oxymethylene groups as the main constituent units. It may be any of polyoxymethylene homopolymer or a copolymer, terpolymer or block copolymer containing a small amount of another constituent unit in addition to the oxymethylene group. The polyoxymethylene molecule is not limited to a linear structure but may be also

a branched or crosslinked. Further the degree of polymerization of the polyoxymethylene is also not particularly limited provided that it can be molded.

Although a considerable stabilization effect can be obtained even when this compound is used singly, it can be used in combination with one or more of nitrogenous compounds such as amines or amides, alkali or alkaline earth metal hydroxides, inorganic acid salts, metal-containing compounds such as carboxylates or alkoxides and sterically hindered phenol compounds.

The term "nitrogenous compounds" herein indicates homo- or copolymerized polyamides such as nylon 12, nylon 6.12 and nylon 6.66.610, substituted polyamides. having a methylol group or the like, nylon salts, polyamides such as polyester amides synthesized from a combination with caprolactam, polyaminotriazoles, dicarboxylic acid dihydrazides, thermal condensates synthesized from urea by heating, uracils, cyanoguanidines, dicyandiamides, guanamine (2,4-diamino-sym-triazine), melamine, N-butylmelamine, N-phenylmelamine, N,N-diphenylmelamine, N,N-diallylmelamine, N,N′,N″-triphenylmelamine, N,N′,N″-trimethylolmelamine, benzoguanamine,
2,4-diamino-6-methyl-sym-triazine,
2,4-diamino-6-butyl-sym-triazine,
2,4-diamino-6-benzyloxy-sym-triazine,
2,4-diamino-6-butoxy-sym-triazine,
2,4-diamino-6-cyclohexyl-sym-triazine,
2,4-diamino-6-chloro-sym-triazine,
2,4-diamino-6-mercapto-sym-triazine,
2,4-dihydroxy-6-amino-sym-triazine (ammelide),
2-hydroxy-4,6-diamino-sym-triazine (ammeline) and
N,N,N′,N′-tetracyanoethylbenzoguanamine. Hindered amines which will be illustrated below are also included therein.

Examples of the metal compounds include hydroxides, carbonates, phosphates, silicates, borates, carboxylates such as formates, malonates, succinates and adipates, salts of higher ($C_{10}$ to $C_{32}$) fatty acids such as stearic acid, and salts of higher fatty acids substituted with, for example, hydroxyl groups, of sodium, potassium, magnesium, calcium, barium, etc. The metal compounds also include basic compounds having at least one tertiary nitrogen atom and a metal carboxylate in the molecule such as sodium N-methyliminodiacetate, trisodium nitrilotriacetate, tetrasodium ethylenediaminetetraacetate, dicalcium ethylenediaminetetraacetate, pentasodium diethylene triaminepentaacetate, pentapotassium diethylenepentaacetate, hexasodium triethylenetetraminehexaacetate and sodium ethyleneoxybis(ethylamine)-N,N,N′,N′-tetraacetate.

When the compound of the formula (I) of the present invention is used in combination with a known antioxidant such as a hindered phenol or hindered amine, a remarkable synergy is obtained in the thermal stability, particularly in the inhibition of heat aging.

Examples of the hindered phenol antioxidants used for this purpose include 2,2′-methylenebis(4-methyl-6-tert-butylphenol), 1,6-hexanediol bis[3-(3,5-di-tert-butyl-4-hydroxyphenyl)propionate], pentaerythritol tetrakis [3-(3,5-di-tert-butyl-4-hydroxyphenyl)propionate], triethylene glycol bis[3-(3-tert-butyl-5-methyl-4-hydroxyphenyl) propionate] and N,N′-hexamethylenebis-(3,5-di-tert-butyl-4-hydroxyhydrocinnamide).

The hindered amine compounds are piperidine derivatives having a steric hindrance group, such as
4-acetoxy-2,2,6,6-tetramethylpiperidine,
4-stearoyloxy-2,2,6,6-tetramethylpiperidine,
4-acryloyloxy-2,2,6,6-tetramethylpiperidine,
4-methoxy-2,2,6,6-tetramethylpiperidine,
4-benzoyloxy-2,2,6,6-tetramethylpiperidine,
4-cyclohexyloxy-2,2,6,6-tetramethylpiperidine,
4-phenoxy-2,2,6,6-tetramethylpipeiidine,
4-benzyloxy-2,2,6,6-tetrampthylpiperidine,
4-(phenylcarbamoyloxy)-2,2,6,6-tetramethylpiperidine,
bis(2,2,6,6-tetramethyl-4-piperidyl) oxalate,
bis(2,2,6,6-tetramethyl-4-piperidyl) malonate,
bis(2,2,6,6-tetramethyl-4-piperidyl) adipate and
bis(2,2,6,6-tetramethyl-4-piperidyl) sebacate.

Further piperidine derivative polycondensates having a high molecular weight, such as dimethyl succinate-1-(2-hydroxy-ethyl)-4-hydroxy-2,2,6,6-tetramethylpiperidine polycondensate are also effective.

The composition of the present invention may contain one or more additives usually added to the thermoplastic resins in order to improve the moldability or to impart properties suitable for the required duty, such as colorants (e.g. dyes or pigments), lubricants, nucleating agents, releasing agents, antistatic agents, surfactants,

organic polymeric materiels, and inorganic or organic, fibrous, powdery or flaky fillers.

The process for producing the composition of the present invention is not particularly limited. For example, the composition can be produced merely by thoroughly blending the components. It can be produced also by mixing the components together, melt-kneading and extruding the mixture on an extruder or the like into pellets, and molding the pellets. In another process, pellets having different compositions are prepared and predetermined amounts of the pellets are mixed together and molded to obtain a molding having an intended composition. In yet another process, one or more kinds of each component are directly placed in a molding machine. It is effective for the homogeneous incorporation of the additives that a part of the resin component be finely pulverized and mixed with other components and the mixture be added to the rest of the resin components.

The resin composition of the present invention can be molded by any of extrusion molding, injection molding, compression molding, vacuum forming, blow molding and foam molding.

As described above and will be described in Examples given below, since the compound of the formula (I) per se of the present invention is free from any acid component and it does not act as a coloring substance, the polyoxymethylene resin composition containing this compound has the following excellent properties: the polymer is prevented from being decomposited in the course of molding; the formation of a decomposition gas is inhibited; the reduction of the degree of polymerization is inhibited and, therefore, the mechanical strength is prevented from being reduced; the formation of the mold deposit is inhibited; and discoloration is inhibited. In addition, the compounds of the formula (I) are effective also in preventing the reduction of mechanical strength, in preventing discoloration in the course of heat aging and in improving weather resistance. Thus a polyoxymethylene resin having a well-balanced thermal stability or its composition can be provided.

Examples

The following non-limiting Examples further illustrate the present invention and its effect.

Examples 1 to 7 and Comparative Examples 1 and 2

A polyoxymethylene copolymer resin containing no stabilizer was pulverized and 0.3 part by weight of one of the following compounds was added to 100 parts by weight of the resin. The mixture was thoroughly stirred in a nitrogen atmosphere:

[Chemical formula 1]

(A) 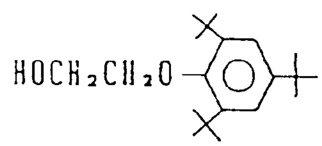

(B) 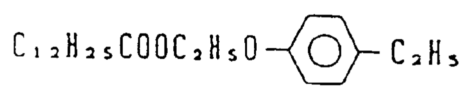

(C) 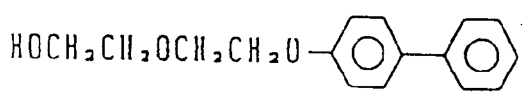

(D) 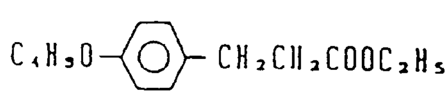

(E) 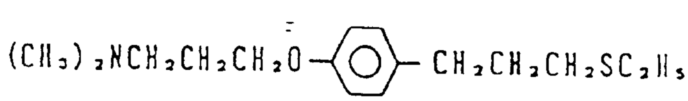

(F) 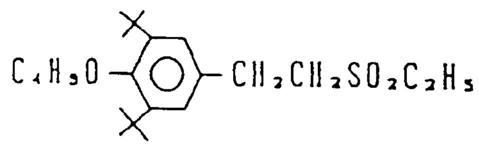

(G) 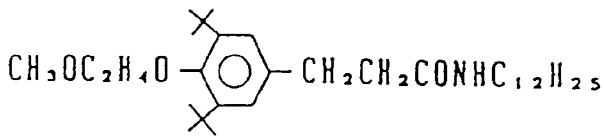

To determine the extent of decomposition of the main chain of the polymer based on a change in the melt viscosity caused by the reduction in the molecular weight with time, 10 g of the mixture was put in a melt indexer MX 101 (manufactured by Takara Kogyo K.K.) and kept in a molten state at 210°C for a predetermined period of time. Then it was passed through an orifice having an inner diameter of 2.09 mm under a load of 2.16 kg to determine the weight (MI value) of the resin flowing out in 10 min. The determination was conducted after a residence time of 7, 30 and 60 min after putting the resin. An increase in MI value after 60 min was determined by the following formula:

$$\Delta MI = MI\ (60\ min) - MI\ (7\ min).$$

For comparison, the same procedure as that described above was repeated except that only the polyoxymethylene copolymer resin free from any additive was used or that 100 parts by weight of the polyoxymethylene resin containing 0.3 part by weight of pentaerythrityl tetrakis[3-(3,5-di-tert-butyl-4-hydroxyphenyl)propionate] (Irganox 1010 manufactured by Ciba-Geigy) was used (Comparative Examples 1 and 2, respectively). The results are given in Table 1.

Table 1

| | Additive | MI | | | ΔMI |
|---|---|---|---|---|---|
| | | 7 min | 30 min | 60 min | |
| Ex. 1 | A | 13.4 | 13.5 | 14.0 | 0.6 |
| Ex. 2 | B | 13.0 | 13.2 | 13.7 | 0.7 |
| Ex. 3 | C | 12.8 | 13.0 | 13.6 | 0.8 |
| Ex. 4 | D | 13.7 | 13.9 | 14.5 | 0.8 |
| Ex. 5 | E | 13.5 | 13.9 | 14.4 | 0.9 |
| Ex. 6 | F | 12.8 | 12.9 | 13.7 | 0.9 |
| Ex. 7 | G | 13.8 | 14.2 | 15.0 | 1.2 |
| Comp. Ex. 1 | none | 13.4 | 14.3 | 15.7 | 2.3 |
| Comp. Ex. 2 | Irg. 1010 | 12.7 | 13.4 | 14.1 | 1.4 |

In some cases, the initial MI value was elevated by the addition of the phenoxy compound. This phenomenon was supposed to be due to the lubricating effect of the additive. This mechanism was different from that of the decomposition of the polymer. The elevation of the MI value of the composition of the present invention affer 30 min was only slight, which indicated that the decomposition of the polymer chain was quite efficiently inhibited. The increase (ΔMI) was only slight even after 60 min.

Examples 8 to 14 and Comparative Examples 3 and 4

The polyoxymethylene copolymer resin was blended with the additive [one of (A) to (G)] and then the mixture was melt-kneaded and extruded on an extruder at 200°C into pellets. 8 g of the pellets were melted and kept in the melt indexer at 2000C for 5 min and then allowed to flow out under the application of a application of a load. Formaldehyde thus formed was collected and the quantity thereof was determined by the acetylacetone method and given in terms of the weight (ppm) of formaldehyde formed from a unit weight of the resin. For comparison, the same procedure as that described above was repeated except that no additive was added (Comparative Example 3) or that Irganox 1010 was added (Comparative Example 4).

The pellets were kept in an injection molding machine at 200°C for 1 h and then molded to form a platy molding having a size of 40 mm x 70 mm x 2 mm. Discoloration caused by the keeping of the melt was measured with a differential colorimeter Z-1001 DP (manufactured by Nihon Denshoku Kogyo K.K.) to determine the yellowing factor (JIS K 7103).

The pellets were then injection-molded at a cylinder temperature of 200°C into a platy molding having a size of 40 mm x 70 mm x 2 mm and tensile test pieces of type No. 1 of JIS K 7113 (thickness: 3 mm). The molding was left to stand at 140°C for 8 days (heat aging) to evaluate the retention of tensile elongation with the tensile test pieces and examine the discoloration (in terms of the yellowing factor) with the platy molding. The results are summarized in Table 2.

Table 2

| | Additive | Amount of formed gas (ppm) | Yellowing factor | After heat aging | |
|---|---|---|---|---|---|
| | | | | elongation retention (%) | yellowing factor |
| Ex. 8 | A | 85 | 4.9 | 32 | 12.0 |
| Ex. 9 | B | 83 | 4.6 | 35 | 11.9 |
| Ex. 10 | C | 85 | 4.5 | 35 | 11.9 |
| Ex. 11 | D | 93 | 5.3 | 33 | 12.8 |
| Ex. 12 | E | 90 | 5.0 | 35 | 13.1 |
| Ex. 13 | F | 86 | 4.8 | 32 | 12.2 |
| Ex. 14 | G | 86 | 4.7 | 34 | 12.4 |
| Comp. Ex. 3 | none | 200 | 5.0 | 20 | cracked |
| Comp. Ex. 4 | Irg 1010 | 125 | 5.8 | 30 | 13.3 |

In the tests of the compositions of the present invention (Examples), the amount of formed formaldehyde was remarkably reduced, the coloring in the course of keeping the melt was extremely slight, and the effect was recognized also in improving the retention of elongation and inhibiting the discoloration after the heat aging.

Examples 15 to 20 and Comparative Examples 5 to 8

0.1, 1 or 2 parts by weight of the above described compound (A) or (B) was added to 100 parts by weight of an additive-free polyoxymethylene copolymer resin and the effects of them were evaluated in the same manner as that of Examples 1 to 14. For comparison, the same procedure as that described above was repeated except that 0.005 or 10 parts by weight of the additive was added to 100 parts by weight of the polyoxymethylene copolymer resin. The results are given in Table 3.

When the amount of the additive fell in the range of the present invention, desirable results were obtained.

However, when it was 0.005 part by weight, the effect in inhibiting the decomposition of the polymer and the formation of the gas or in retaining the elongation was unsatisfactory and, on the contrary, when 10 parts by weight of the additive was used, the discoloration was serious.

Examples 21 to 27 and Comparative Example 9

0.3 parts by weight of one of the compounds (A) to (G) used in the Examples 1 to 7 and 0.2 part by weight of melamine were added to 100 parts by weight of an additive-free polyoxymethylene copolymer resin and the effect was evaluated in the same manner as that of the Examples 1 to 14. For comparison, the same procedure as that described above was repeated except that only 0.2 part by weight of melamine was added in the samemanner as that described above. The results are given in Table 4.

[Table 3]

| | Additive: amount | MI | | | ΔMI | Amount of formed gas (ppm) | Yellowing factor | Heat aging | |
|---|---|---|---|---|---|---|---|---|---|
| | | 7 min | 30 min | 60 min | | | | retention of elongation (%) | yellowing factor |
| Comp. Ex. 5 | A: 0.005 pt. by wt. | 13.4 | 14.0 | 15.5 | 2.1 | 185 | 5.1 | 23 | cracked |
| Ex. 15 | A: 0.1 pt. by wt. | 13.4 | 13.6 | 14.5 | 1.1 | 102 | 5.0 | 29 | 12.1 |
| Ex. 16 | A: 1 pt. by wt. | 13.5 | 13.5 | 14.1 | 0.6 | 83 | 5.2 | 33 | 12.4 |
| Ex. 17 | A: 2 pt. by wt. | 13.6 | 13.8 | 14.4 | 0.8 | 78 | 5.4 | 32 | 12.9 |
| Comp. Ex. 6 | A: 10 pt. by wt. | 13.8 | 14.2 | 15.0 | 1.2 | 73 | 6.1 | 26 | 14.2 |
| Comp. Ex. 7 | B: 0.005 pt. by wt. | 13.5 | 14.0 | 15.6 | 2.1 | 176 | 4.9 | 21 | cracked |
| Ex. 18 | B: 0.1 pt. by wt. | 13.1 | 13.5 | 14.1 | 1.0 | 100 | 4.6 | 29 | 11.0 |
| Ex. 19 | B: 1 pt. by wt. | 13.2 | 13.4 | 14.1 | 0.9 | 80 | 5.0 | 34 | 12.2 |
| Ex. 20 | B: 2 pt. by wt. | 13.2 | 13.6 | 14.3 | 1.1 | 79 | 5.2 | 32 | 12.8 |
| Comp. Ex. 8 | B: 10 | 13.3 | 14.0 | 15.2 | 1.9 | 78 | 6.0 | 30 | 14.3 |

[Table 4]

| | Additive: amount | MI | | | ΔMI | Amount of formed gas (ppm) | Yellowing factor | Heat aging | |
|---|---|---|---|---|---|---|---|---|---|
| | | 7 min | 30 min | 60 min | | | | retention of elongation (%) | yellowing factor |
| Ex. 21 | A + melamine | 13.1 | 13.2 | 13.6 | 0.5 | 53 | 4.5 | 45 | 11.4 |
| Ex. 22 | B + melamine | 13.1 | 13.3 | 13.7 | 0.6 | 71 | 4.7 | 48 | 12.0 |
| Ex. 23 | C + melamine | 12.8 | 12.9 | 13.4 | 0.7 | 70 | 4.2 | 48 | 11.6 |
| Ex. 24 | D + melamine | 13.5 | 13.6 | 14.0 | 0.5 | 83 | 5.0 | 41 | 12.1 |
| Ex. 25 | E + melamine | 13.2 | 13.4 | 13.7 | 0.5 | 77 | 4.6 | 43 | 12.4 |
| Ex. 26 | F + melamine | 12.3 | 12.5 | 13.0 | 0.7 | 64 | 4.3 | 48 | 12.0 |
| Ex. 27 | G + melamine | 13.8 | 14.0 | 14.5 | 0.7 | 65 | 4.4 | 43 | 11.9 |
| Comp. Ex. 9 | melamine | 13.1 | 14.0 | 15.0 | 1.9 | 100 | 5.0 | 25 | surface blushing |

Also in this case, a further improvement of the composition of the present invention was obtained in inhibiting the formation of formaldehyde gas and retaining the elongation after heat aging.

Examples of 28 to 35 and Comparative Examples 10 and 11

0.2 par by weight of a compound (A), (B), (C) or (D) used in the Examples 1 to 7, 0.2 part by weight of Irganox 1010 (a phenolic antioxidant)
or bis(2,2,6,6-tetramethyl-4-piperidyl) sebacate (a hindered amine antioxidant) (Sanol LS-770, a product of Sankyo Co., Ltd.) and 0.2 part by weight of melamine were added to 100 parts by weight of the polyoxymethylene copolymer resin and the effect was evaluated in the same manner as that of the Examples 1 to 14.

In the Comparative Examples, 0.4 part by weight of Irganox 1010 and 0.2 part by weight of melamine (Comparative Example 10) or 0.4 part by weight of Sanol LS-770 and 0.2 part by weight of melamine (Comparative Example 11) were used and the effect was evaluated in the same manner as that described above.

The results are summarized in Table 5.

[Table 5]

| | Additive | MI | | | ΔMI | Amount of formed gas (ppm) | Yellowing factor | Heat aging | |
|---|---|---|---|---|---|---|---|---|---|
| | | 7 min | 30 min | 60 min | | | | retention of elongation (%) | yellowing factor |
| Ex. 28 | A + Irg. 1010 + melamine | 13.0 | 12.9 | 13.5 | 0.5 | 51 | 4.7 | 56 | 11.6 |
| Ex. 29 | B + Irg. 1010 + melamine | 13.0 | 13.1 | 13.4 | 0.4 | 63 | 4.5 | 60 | 12.0 |
| Ex. 30 | C + Irg. 1010 + melamine | 13.0 | 13.3 | 13.5 | 0.5 | 67 | 4.7 | 52 | 12.7 |
| Ex. 31 | D + Irg. 1010 + melamine | 13.9 | 14.1 | 14.4 | 0.5 | 75 | 4.8 | 65 | 12.1 |
| Comp. Ex. 10 | Irg. 1010 + melamine | 12.8 | 13.1 | 13.6 | 0.7 | 84 | 5.1 | 53 | 13.0 |
| Ex. 32 | A + LS-770 + melamine | 13.2 | 13.2 | 13.4 | 0.6 | 46 | 4.4 | 63 | 10.8 |
| Ex. 33 | B + LS-770 + melamine | 12.9 | 13.1 | 13.3 | 0.4 | 64 | 3.9 | 58 | 10.7 |
| Ex. 34 | C + LS-770 + melamine | 13.0 | 13.2 | 13.5 | 0.5 | 65 | 4.5 | 55 | 11.9 |
| Ex. 35 | D + LS-770 + melamine | 13.4 | 13.9 | 14.5 | 0.6 | 70 | 4.2 | 61 | 11.3 |
| Comp. Ex. 11 | LS-770 + melamine | 12.9 | 13.0 | 13.6 | 0.7 | 82 | 4.7 | 54 | 12.0 |

Also in this case, the retention of elongation of the composition of the present invention was remarkably improved. On the other hand, when the combination with the hindered phenol was employed, although slight coloring was observed, the coloring level was lower than that found when the hindered phenol was used alone.

Examples 36 to 41 and Comparative Examples 12 and 13

After 100 parts by weight of a stabilizer-free polyoxymethylene copolymer was pulverized, 0.3 part by weight of one of the following compounds (H) to (M) was added thereto and the mixture was thoroughly stirred in a nitrogen atmosphere:

(H) 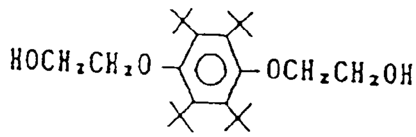

(I) 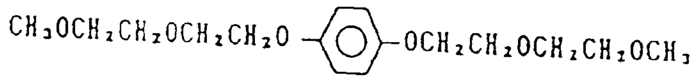

(J) 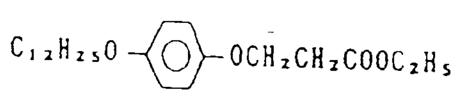

(K) 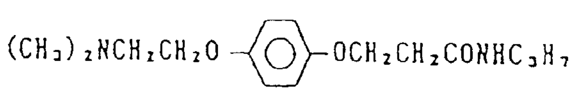

(L) 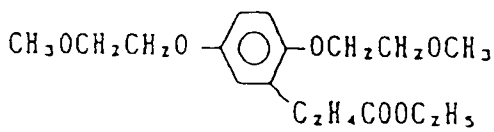

(M) 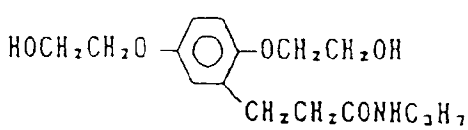

To determine the extent of decomposition of the main chain of the polymer based on a change in the melt viscosity caused by the reduction of the molecular weight with time, 10 g of the mixture was put in a melt indexer MX 101 (manufactured by Takara Kogyo K.K.) and kept in a molten state at 210°C for a predetermined period of time. Then it was passed through an orifice having an inner diameter of 2.09 mm under a load of 2.16 kg to determine thy weight (MI value) of the resin flowing out in 10 min. The determination was conducted after a residence time of 7, 30 and 60 min after inserting the resin. An increase in the MI value after 60 min was determined by the following formula:

$$\Delta MI = MI\ (60\ min) - MI\ (7\ min).$$

For comparison, the same procedure as that described above was repeated except that only the polyoxymethylene copolymer resin free from any additive was used or that 100 parts by weight of the polyoxymethylene copolymer resin containing 0.3 part by weight of pentaerythritol tetrakis[3-(3,5-di-tert-butyl-4-hydroxyphenyl)propionate] (Irganox 1010 manufactured by Ciba-Geigy) was used (Comparative Examples 12 and 13, respectively). The results are given in Table 6.

Table 6

| | Additive | MI | | | ΔMI |
|---|---|---|---|---|---|
| | | 7 min | 30 min | 60 min | |
| Ex. 36 | H | 12.9 | 13.2 | 13.6 | 0.7 |
| Ex. 37 | I | 13.0 | 13.2 | 13.6 | 0.6 |
| Ex. 38 | J | 12.6 | 12.8 | 13.4 | 0.8 |
| Ex. 39 | K | 12.5 | 12.7 | 13.2 | 0.7 |
| Ex. 40 | L | 12.9 | 13.1 | 13.5 | 0.6 |
| Ex. 41 | M | 12.8 | 13.0 | 13.7 | 0.9 |
| Comp Ex. 12 | none | 13.4 | 14.3 | 15.7 | 2.3 |
| Comp Ex 13 | Irg.1010 | 12.7 | 13.4 | 14.1 | 1.4 |

In some cases, the initial MI value was elevated by the addition of the phenoxy compound. This phenomenon was supposed to be due to the lubricating effect of the additive. This mechanism was different from that of the decomposition of the polymer. The elevation of the MI value of the composition of the present invention after 30 min was only slight, which indicated that the decomposition of the polymer chain was quite efficiently inhibited. The increase (ΔMI) was only slight also after 60 min.

Examples 42 to 47 and Comparative Examples 14 and 15

The polyoxymethylene copolymer resin was blended with the additive [one of (H) to (M)] in the same manner as that of the Examples 36 to 41 and the mixture was melt-kneaded and extruded on an extruder at 200°C into pellets. 8 g of the pellets were melted and kept in the melt indexer at 200°C for 5 min and then allowed to flow out under the application of a load. Formaldehyde thus formed was collected and the quantity thereof was determined by the acetylacetone method and given in terms of the weight (ppm) of formaldehyde formed from a unit weight of the resin. For comparison, the same procedure as that described above was repeated except that no additive was added (Comparative Example 14) or that Irganox 1010 was added (Comparative Example 15).

The pellets were kept in an injection molding machine at 200°C for 1 h and then molded into a platy molding having a size of 40 mm x 70 mm x 2 mm. Discololroration caused by the keeping of the melt was measured with a differential colorimeter Z-1001 DP (manufactured by Nihon Denshoku Kogyo K.K.) to determine the yellowing factor (JIS K 7103).

The pellets were then injection-molded at a cylinder temperature of 2000C into a platy molding having a size of 40 mm x 70 mm x 2 mm and tensile test pieces of type No. 1 of JIS K 7113 (thickness: 3 mm). The molding was left, to stand at 1400C for 8 days (heat aging) to evaluate the retention of tensile elongation with the tensile test pieces and examine the coloring (in terms of yellowing factor) with the platy molding. The results are summarized in Table 7.

Table 7

| | Additive | Amount of formed gas (ppm) | Yellowing factor | After heat aging | |
|---|---|---|---|---|---|
| | | | | elongation retention (%) | yellowing factor |
| Ex. 42 | H | 70 | 4.5 | 34 | 12.6 |
| Ex. 43 | I | 69 | 4.7 | 31 | 12.9 |
| Ex. 44 | J | 71 | 5.1 | 34 | 13.0 |
| Ex. 45 | K | 78 | 4.7 | 29 | 12.5 |
| Ex. 46 | L | 69 | 5.1 | 35 | 12.8 |
| Ex. 47 | M | 89 | 4.6 | 21 | 12.4 |
| Comp. Ex. 14 | none | 200 | 5.0 | 20 | cracked |
| Comp. Ex. 15 | Irg. 1010 | 125 | 5.8 | 30 | 13.3 |

In the tests of the compositions of the present invention (Examples), the amount of formed formaldehyde was remarkably reduced, the coloring in the course of keeping the melt was extremely slight, and the effect was recognized also in improving the retention of elongation and inhibiting the coloring after the heat aging.

Examples 48 to 53 and Comparative Examples 16 to 19

0.1, 1 or 2 parts by weight of the compound (H) or (I) was added to 100 parts by weight of the additive-free polyoxymethylene copolymer resin and the effects of them were evaluated in the same manner as that of the Examples 36 to 47. For comparison, the same procedure as that described above was repeated except that 0.005 or 10 parts by weight of the additive was added to 100 parts by weight of the polyoxymethylene copolymer resin. The results are given in Table 8.

When the amount of the additive fell in the range of the present invention, desirable results were obtained. However, when the amount was 0.005 part by weight, the effect in inhibiting the decomposition of the polymer and the formation of the gas or in retaining the elongation was unsatisfactory and, on the contrary, when 10 parts by weight of the additive was used, the coloring was serious.

[Table 8]

| | Additive: amount | MI | | | ΔMI | Amount of formed gas (ppm) | Yellowing factor | After heat aging | |
|---|---|---|---|---|---|---|---|---|---|
| | | 7 min | 30 min | 60 min | | | | retention of elongation (%) | yellowing factor |
| Comp. Ex. 16 | H: 0.005 pt. by wt. | 13.4 | 14.1 | 15.6 | 2.2 | 185 | 5.0 | 23 | cracked |
| Ex. 48 | H: 0.1 pt. by wt. | 12.9 | 13.3 | 14.0 | 1.1 | 75 | 4.4 | 30 | 12.6 |
| Ex. 49 | H: 1 pt. by wt. | 13.0 | 13.2 | 13.7 | 0.7 | 68 | 4.6 | 34 | 12.8 |
| Ex. 50 | H: 2 pt. by wt. | 13.2 | 13.3 | 14.1 | 0.9 | 66 | 4.9 | 36 | 13.1 |
| Comp. Ex. 17 | H: 10 pt. by wt. | 13.4 | 13.7 | 14.5 | 1.1 | 70 | 5.5 | 35 | 14.6 |
| Comp. Ex. 18 | I: 0.005 pt. by wt. | 13.3 | 14.1 | 15.4 | 2.1 | 178 | 4.9 | 23 | cracked |
| Ex. 51 | I: 0.1 pt. by wt. | 13.0 | 13.4 | 13.9 | 0.9 | 78 | 4.7 | 31 | 12.8 |
| Ex. 52 | I: 1 pt. by wt. | 13.1 | 13.3 | 13.7 | 0.6 | 66 | 4.8 | 34 | 13.0 |
| Ex. 53 | I: 2 pt. by wt. | 13.2 | 13.4 | 13.9 | 0.7 | 65 | 5.1 | 37 | 13.2 |
| Comp. Ex. 19 | I: 10 pt. by wt. | 13.5 | 13.9 | 15.0 | 1.5 | 63 | 5.9 | 35 | 14.0 |

Examples 54 to 59 and Comparative Example 20

0.3 part by weight of one of the compounds (H) to (M) described in the Examples 36 to 41 and 0.2 part by weight of melamine were added to 100 parts by weight of the additive-free polyoxymethylene copolymer resin and the effect was evaluated in the same manner as that of the Examples 36 to 47. For comparison, the same procedure as that described above was repeated except that only 0.2 part by weight of melamine was added in the same manner as that described above. The results are given in Table 9.

Also in these cases, a further improvement of the effect of the composition of the present invention was observed in inhibiting the formation of formaldehyde gas and retaining the elongation after the heat aging.

[Table 9]

| | Additive: amount | MI | | | ΔMI | Amount of formed gas (ppm) | Yellowing factor | After heat aging | |
|---|---|---|---|---|---|---|---|---|---|
| | | 7 min | 30 min | 60 min | | | | retention of elongation (%) | yellowing factor |
| Ex. 54 | H + melamine | 13.1 | 13.3 | 13.6 | 0.5 | 60 | 4.3 | 44 | 12.4 |
| Ex. 55 | I + melamine | 12.9 | 13.0 | 13.4 | 0.5 | 62 | 4.7 | 36 | 13.2 |
| Ex. 56 | J + melamine | 12.4 | 12.7 | 13.1 | 0.7 | 65 | 4.9 | 42 | 12.8 |
| Ex. 57 | K + melamine | 12.3 | 12.5 | 13.0 | 0.7 | 71 | 4.8 | 40 | 12.4 |
| Ex. 58 | L + melamine | 12.8 | 12.9 | 13.3 | 0.5 | 63 | 5.0 | 39 | 12.9 |
| Ex. 59 | M + melamine | 12.8 | 13.1 | 13.5 | 0.7 | 76 | 4.4 | 37 | 12.3 |
| Comp. Ex. 20 | melamine | 13.1 | 14.0 | 15.0 | 1.9 | 100 | 5.0 | 25 | surface blushing |

Examples 60 to 67 and Comparative Examples 21 and 22

0.2 part of a compound (H), (I), (J) or (K) used in the Examples 36 to 41, 0.2 part by weight of Irganox 1010 (a phenolic antioxidant) or bis(2,2,6,6-tetramethyl-4-piperidyl) sebacate (a hindered amine antioxidant) (Sanol LS-770, a product of Sankyo Co. Ltd.) and 0.2 part by weight of melamine were added to 100 parts by weight of polyoxymethylene copolymer and the effect was evaluated in the same manner as that of the Examples 36 to 47.

In the Comparative Examples, 0.4 part by weight of Irganox 1010 and 0.2 part by weight of melamine (Comparative Example 21) or 0.4 part by weight of Sanol LS-770 and 0.2 part by weight of melamine (Comparative Example 22) were used and the effect was evaluated in the same manner as that described above. The results are summarized in Table 10.

Also in this case, a remarkable improvement of the effect of the composition of the present invention was observed in retaining the elongation. On the other hand, when the combination with the hindered phenol was employed, although slight coloring was observed, the coloring level was lower than that found when the hindered phenol was used alone.

[Table 10]

| | Additive | MI | | | ΔMI | Amount of formed gas (ppm) | Yellowing factor | After heat aging | |
|---|---|---|---|---|---|---|---|---|---|
| | | 7 min | 30 min | 60 min | | | | retention of elongation (%) | yellowing factor |
| Ex. 60 | H + Irg. 1010 + melamine | 13.0 | 13.1 | 13.4 | 0.4 | 56 | 4.4 | 51 | 12.6 |
| Ex. 61 | I + Irg. 1010 + melamine | 13.0 | 13.2 | 13.5 | 0.5 | 54 | 4.7 | 49 | 13.2 |
| Ex. 62 | J + Irg. 1010 + melamine | 12.3 | 12.4 | 12.8 | 0.5 | 56 | 5.1 | 52 | 13.0 |
| Ex. 63 | K + Irg. 1010 + melamine | 12.4 | 12.5 | 13.0 | 0.6 | 58 | 5.0 | 54 | 12.8 |
| Comp. Ex. 21 | Irg. 1010 + melamine | 12.8 | 13.1 | 13.6 | 0.8 | 84 | 5.1 | 53 | 13.0 |
| Ex. 64 | H + LS-770 + melamine | 12.9 | 13.1 | 13.3 | 0.4 | 49 | 4.4 | 52 | 12.5 |
| Ex. 65 | I + LS-770 + melamine | 12.8 | 13.0 | 13.2 | 0.4 | 54 | 4.5 | 53 | 13.1 |
| Ex. 66 | J + LS-770 + melamine | 12.4 | 12.5 | 12.9 | 0.5 | 52 | 4.4 | 55 | 12.7 |
| Ex. 67 | K + LS-770 + melamine | 12.3 | 12.4 | 12.9 | 0.6 | 53 | 4.9 | 51 | 12.4 |
| Comp. Ex. 22 | LS-770 + melamine | 12.9 | 13.0 | 13.6 | 0.7 | 82 | 4.7 | 54 | 12.0 |

## Claims

1. A stabilized polyoxymethylene resin composition containing 0.01 to 5% by weight of a compound of the following general formula (I) or (II):

$$Ar^1\text{-O-X} \quad (I)$$
$$Ar^2(\text{-O-X})_s \quad (II)$$

wherein $Ar^1$ represents an aryl group (excluding one having a hydroxyl group directly bonded thereto as a substituent), $Ar^2$ represents a benzene or naphthalene ring (excluding one having a hydroxyl group directly bonded thereto as a substituent), X represents an atomic group selected from among

$-C_mH_{2m+1}$
$-C_mH_{2m}O)_nC_pH_{2p+1}$
$-C_mH_{2m}SC_pH_{2p+1}$
$-C_mH_{2m}COC_nH_{2n+1}$
$-C_mH_{2m}COOC_nH_{2n+1}$
$-C_mH_{2m}OCOC_nH_{2n+1}$
$-C_mH_{2m}S(=O)_2C_nH_{2n+1}$
$-C_mH_{2m}P(=O)(R)C_nH_{2n+1}$
$-C_mH_{2m}P(=O)(R)OC_nH_{2n+1}$
$-C_mH_{2m}OP(=O)(R)C_nH_{2n+1}$
$-C_mH_{2m}OP(=O)(R)OC_nH_{2n+1}$
$-C_mH_{2m}N(C_pH_{2p+1})(C_qH_{2q+1})$
$-C_mH_{2m}CON(C_pH_{2p+1})(C_qH_{2q+1})$ and
$-C_mH_{2m}N(C_pH_{2p+1})COC_qH_{2q+1}$

(m and n each being an integer of 1 to 20, p and q each being an integer of 0 to 20, and R being an alkyl or alkoxy group having 1 to 20 carbon atoms, phenyl or phenoxy group) and s represents an integer of 2 or 3.

2. A stabilized polyoxymethylene resin composition according to Claim 1, wherein $Ar^1$ and $Ar^2$ of the general formulae (I) and (II) each represent a benzene ring substituted with only -OX or having as a substituent an atomic group selected from among

$-C_mH_{2m+1}$
$-C_mH_{2m}O)_nC_pH_{2p+1}$
$-C_mH_{2m}SC_pH_{2p+1}$
$-C_mH_{2m}COC_nH_{2n+1}$
$-C_mH_{2m}COOC_nH_{2n+1}$
$-C_mH_{2m}OCOC_nH_{2n+1}$
$-C_mH_{2m}S(=O)_2C_nH_{2n+1}$
$-C_mH_{2m}P(=O)(R)C_nH_{2n+1}$
$-C_mH_{2m}P(=O)(R)OC_nH_{2n+1}$
$-C_mH_{2m}OP(=O)(R)C_nH_{2n+1}$
$-C_mH_{2m}OP(=O)(R)OC_nH_{2n+1}$
$-C_mH_{2m}N(C_pH_{2p+1})(C_qH_{2q+1})$
$-C_mH_{2m}CON(C_pH_{2p+1})(C_qH_{2q+1})$ and
$-C_mH_{2m}N(C_pH_{2p+1})COC_nH_{2n+1}$

(m and n each being an integer of 1 to 20, p and q each being an integer of 0 to 20, and R being an alkyl or alkoxy group having 1 to 20 carbon atoms, phenyl or phenoxy group) and a phenyl group.

3. A stabilized polyoxymethylene resin composition according to Claim 1 or 2, wherein X of the general formulae (I) and (II) represents an atomic group selected from among

$-C_mH_{2m+1}$
$-C_mH_{2m}O)_nC_pH_{2p+1}$
$-C_mH_{2m}COOC_nH_{2n+1}$
$-C_mH_{2m}OCOC_nH_{2n+1}$, and
$-C_mH_{2m}N(C_pH_{2p+1})(C_qH_{2q+1})$,

(m and n each being an integer of 1 to 20, and p and q each being an integer of 0 to 20).

4. A stabilized polyoxymethylene resin composition according to Claim 1, wherein $Ar^2$ in the compound represented by the general formula (II) represents a benzene ring (excluding one having a hydroxyl group directly bonded thereto as a substituent) and s represents 2.

5. A stabilized polyoxymethylene resin composition containing 0.01 to 5% by weight of a compound of the general formula (I) or (II) as set forth in any preceding claim and further one or more of phenolic compounds, nitrogenous compounds, alkali or alkaline earth metal hydroxides, inorganic acid salts and carboxylic acid salts.

6. A stabilized polyoxymethylene resin composition according to any preceding claim, wherein the amount of the compound of the general formula (I) or (II) is 0.1 to 2% by weight, based on the polyoxymethylene resin.